# EUROPÄISCHE PATENTSCHRIFT

(11) **EP 0 612 607 B1**
(45) Veröffentlichungstag und Bekanntmachung des Hinweises auf die Patenterteilung: **25.08.1999**
(21) Anmeldenummer: 94101320.3
(22) Anmeldetag: 28.01.1994
(51) Int. Cl.: B29C 70/08

(54) **Zugkörper mit angeformtem Profil sowie Verfahren zur Herstellung derselben**
Tensile body with a formed profile as well as method for fabricating the same
Elément de traction avec profil spécifique et procédé pour sa fabrication

(30) Priorität: 28.01.1993 DE 4302409
(43) Veröffentlichungstag der Anmeldung: 31.08.1994
(73) Patentinhaber: Belloli SA, 6537 Grono (CH)
(72) Erfinder: Belloli, Emilio, CH-6537 Grono (CH)
(74) Vertreter: Becker, Eberhard, Dr.

(56) Entgegenhaltungen:
- EP-A- 0 156 148
- WO-A-84/02306
- WO-A-92/03277
- DE-A- 3 839 835
- US-A- 3 096 958
- US-A- 4 636 422

## Beschreibung

Die Erfindung betrifft ein Verfahren zur kontinuierlichen Herstellung eines Zugkörpers mit angeformtem Profil, einen nach diesem Verfahren hergestellten Zugkörper mit mindestens über einen Teil der Gesamtlänge des Zugkörpers angeformten Profil sowie die Verwendung eines Zugkörpers.

Zugkörper, speziell Zugstäbe, mit Endlos- oder Langfaserverstärkung finden wegen ihrer hohen Zugfestigkeit im Verhältnis zu ihrem Gewicht, ihrer Korrosionsbeständigkeit, ihren guten elektrischen Isolationseigenschaften und ihrer hohen Dimensionsstabilität vermehrt Anwendung in diversen Einsatzgebieten mit hohem Anspruchsprofil.

Solche Zugkörper können z.B. durch Pultrusion hergestellt werden und finden bevorzugt Verwendung als Zug- oder Felsenanker im Tunnelbau.

Die Verwendungsmöglichkeit der Zugkörper wird in besonderem Maße durch die Höhe der einleitbaren Kräfte und ihre Haftung in ihrer Umgebung begrenzt. Diese kann durch eine profilierte äußere Oberfläche wesentlich erhöht werden. Zuganker weisen deshalb bevorzugt eine Profilierung auf, die vorteilhafterweise die Form eines Gewindes hat.

In Zugkörpern aus synthetischen Polymeren setzen die meist ab Roving verwendeten endlosen Verstärkungsfasern, infolge ihrer längsgerichteten dichten Einpackung, einer nachträglichen Profilierung, z.B. durch Walzen oder Einpressen, einen erheblichen Widerstand entgegen. Ein Gewinde oder eine beliebige andere Profilierung kann nur durch eine nachfolgende zerspanende Bearbeitung erreicht werden. Dabei werden die Verstärkungsfasern verletzt, es entsteht nicht-verwertbarer Abfall und die Radialbelastbarkeit solcher Zugkörper ist gering.

In der US-A-4 296 060 wird eine Profilierung durch Verdrehen eines pultrudierten Polymer-Stabes mit mindestens einer Rippe an der Oberfläche bei teilweise ausgehärteten Material erreicht. Damit kann jedoch kein exaktes, selbsthemmendes und reproduzierbares Gewinde hergestellt werden.

In der US-A-3 283 050 wird ein Gewinde durch eine rotierende Form in einen glasfaserverstärkten Polymerkörper eingebracht. In solchen Zugkörpern folgen die Endlosfasern nicht den Gewindeflanken, sie werden zerschnitten und verstärken das Profil nur ungenügend.

Die DE-A-37 03 974 hat zum Ziel eine Möglichkeit zu schaffen, um Zuggliedern aus hochfesten Faserverbundwerkstoffen Eigenschaften zu geben, die es erlauben, solche Zugglieder im Bauwesen in ähnlicher Weise wie Zugglieder aus Stahl einsetzen zu können. Das hier beschriebene Zugglied hat keine Verstärkung in der Außenschicht.

In der DE-A-40 16 427 sind Schrauben bzw. Gewindestäbe aus faserverstärkten thermoplastischen Kunststoffen beschrieben. Die Schrauben bzw. Gewindestäbe sind koextrudiert und als Ausgangsmaterial werden kreisrunde Vollstangen verwendet.

Die DE-A-35 04 829 beschreibt ein Gewindeelement mit einem Gewindebereich und einem darunter liegenden Tragbereich aus Fasermaterial in einer Matrixeinbettung, wobei die Fasern endlos- oder langfaserig das Gewindeprofil ungeschnitten durchziehen und zumindest in einem das Gewindeprofil ausbildenden Mantelbereich schräg mit etwa 45° zur Längsrichtung des Elements teilweise rechtsgängiger wie teilweise mit linksgängiger Ausrichtung verlaufen. Das Gewindeelement hat bevorzugt Polyepoxide als Matrix und im Gewindebereich einen gewebten bzw. geflochtenen Gewebeschlauch. Das Gewindeelement wird durch Pressen in Form diskontinuierlich hergestellt.

In der DE-A-30 17 870 wird eine rohrförmige Kompositstruktur aus mehreren Schläuchen mit Verstärkungsteil, das harzgetränkt ist, beschrieben. Die Kompositstruktur wird diskontinuierlich hergestellt.

Die DE-A-34 00 043 beschreibt ein Verfahren zur Herstellung von stabförmigen Bauelementen. Das Verfahren ist diskontinuierlich und enthält fünf Schritte. Das stabförmige Bauelement enthält keine Hüllschicht bzw. kein Profil mit Verstärkung.

In der WO-A-92/03277 sind ein asymmetrisch geformtes Strangprofil und ein Verfahren zu dessen Herstellung offenbart. An diesen Körper wird kein Profil angeformt. Der dort offenbarte Formkörper ist vielmehr selbst ein sogenanntes Profil, mit einer besonders profilierten Querschnittsgestalt ausgebildet. Zwar wird ein langfaseriges Innenteil mit einem kurzfaserigen Mantel umhüllt, doch geschieht dies nicht durch kraftschlüssige Anformung, weil dort der Querschnitt jener Düse, in der die Ummantelung aufgebracht wird, ausreichend groß ist, um dem Mantel der Ummantelung Platz zu bieten, ohne daß dies unter besonderem Druck mit dem Innenteil verbunden wird. Es besteht also gemäß WO-A-92/03277 kein Anlaß, eine besonders kraftschlüssige Verbindung zwischen dem Innenteil und der lediglich der Umhüllung dienenden Ummantelung vorzusehen.

In der WO-A-84/02306 sind Verbundmaterialien beschrieben mit einer Kernschicht 10, die aus gehobenen synthetischen oder Metallgarnen oder Fasern gebildet wird und die mit Hilfe von Kunststoffmaterialien imprägniert wird. Die Dichte dieser Kernschicht ist variabel in ihrer Dicke und steigt von der Mitte nach außen an.

Aus der DE-A-30 17 870 sind rohrförmige Kompositstrukturen bekannt, die auch als Zug- oder Felsanker Verwendung finden können.

Die DE-A-40 16 427 beschreibt Schrauben bzw. Gewindestäbe aus faserverstärkten thermoplastischen Kunststoffen, die mittels Zweikomponenten-Koextrusionswerkzeugen hergestellt werden.

Die DE-A-34 00 043 beschreibt ein Verfahren zur Herstellung von stabförmigen Bauelementen großer Streckung, bei dem auf einem quer zu seiner Längsstreckung formstabilen Kern aus Schaumstoff nacheinander wenigstens eine Lage von achsparallelen unidirektionalen Fasern und auf dieser Faserlage wenigstens eine Lage mit sich unter einem Winkel zur Achse kreuzender Fasern aufgebracht wird, wobei die Fasern in einem aushärtenden Kunstharz eingebettet werden.

DE-A-37 03 974 beschreibt ein Zugglied aus hochfesten, unidirektionalen Fasern, vornehmlich aus miteinander verklebten Aramidfasern zur Verwendung als Ankerelement im Grund- oder Bergbau.

Aus der DE-A-38 39 835 ist ein Zugkörper mit mindestens über einem Teil der Gesamtlänge des Ankers angeformten Gewinde, bestehend aus einem durch Pultrusion hergestellten Innenteil aus einem mit Langsfasern verstreckten ersten Polymeren und aus mindestens einer mit Kurzstapelfasern verstärkten umhüllenden Schicht aus mindestens einem weiteren Polymeren bekannt. Gemäß der DE-A-38 39 835 wird zunächst durch Pultrusion ein Rovingstrang aus thermoplastischem Prepeg-Material erzeugt. Danach wird der Rovingstrang durch ein Schmelzbad und eine Düse mit grösserem Durchmesser als der Rovingstrang hindurchgeleitet, wobei eine aus Kurzfasern bestehende Mantelschicht aufgebracht wird. Nach erfolgtem Abkühlen wird in die Mantelschicht ein Gewinde im Kaltrollverfahren eingerollt. Hohe Zugkräfte können über diesen bekannten Zugkörper nicht übertragen werden.

Die Aufgabe der vorliegenden Erfindung ist es daher, ein Verfahren sowie einen Zugkörper zu schaffen, in den hohe radiale und tangentiale Zugkräfte eingeleitet und von ihm übertragen werden können, und der kostengünstig herstellbar ist.

Diese Aufgabe wird erfindungsgemäß durch das Verfahren nach Anspruch 1 gelöst.

Diese Aufgabe wird weiterhin erfindungsgemäß durch einen Zugkörper nach Anspruch 5 gelöst.

Der erfindungsgemäße Zugkörper kann als Zug- oder Felsanker verwendet werden.

In den Unteransprüchen sind vorteilhafte Ausführungsformen der Erfindung enthalten.

Die erfindungsgemäßen Zugkörper bzw. Zuganker sind insbesondere als Stab oder Rohr ausgebildet und bestehen aus einem bevorzugt durch Pultrusion hergestellten Innenteil aus einem ersten Polymeren, das durch Lang- oder Endlosfasern verstärkt ist und mindestens einer umhüllenden Schicht aus mindestens einem mit Kurzstapelfasern verstärkten weiteren Polymeren. Das angeformte kraftschlüssige Profil ist in der mindestens einen umhüllenden Schicht ausgebildet und beeinträchtigt somit den Aufbau des Innenteils nicht. Sind mehrere umhüllende Schichten vorhanden, so können diese aus gleichen oder unterschiedlichen, aber miteinander verträglichen Polymeren bestehen.

Das Profil ist bevorzugt ein exakt ausgebildetes, reproduzierbares Gewinde.

Die Verstärkungsfasern des ersten Polymers sind Endlos- oder Langfasern, bevorzugt ab Roving, aus der Gruppe Glasfaser, Kohlefaser, Polyacrylfaser, Polyvinylalkoholfaser und Aramidfaser. Die Verstärkungsfasern des mindestens einen zweiten bzw. weiteren Polymeren sind handelsübliche Kurzstapelfasern, ausgewählt aus der gleichen Gruppe. Es müssen aber nicht die gleichen Fasertypen sein. Darüber hinaus kann das mindestens eine weitere Polymere mit Whiskers (Einkristallfasern) verstärkt sein und/oder zusätzlich anwendungsbedingte Additive oder Zusätze nach dem Stand der Technik enthalten.

Der unerwartete Vorteil des erfindungsgemäßen Zugkörpers liegt darin, daß sein, in der mindestens einen, mit Kurzstapelfasern verstärkten umhüllenden Schicht, exakt geformtes Profil hohen Belastungen standhält und hohe Zugkräfte aufnehmen kann, die höher sind, als die für nach dem Stand der Technik hergestellten Zugkörper. Andererseits ist es nach dem Stand der Technik nicht möglich, derartige Profile und insbesondere Gewinde in durch Pultrusion hergestellten Zugkörpern anzuformen.

Ein weiterer Vorteil des erfindungsgemäßen Zugkörpers ist es, daß er nach dem später beschriebenen erfindungsgemäßen Verfahren nicht nur als Rohling kontinuierlich, sondern "on-line" fertig hergestellt und damit kostengünstig in großen Mengen produziert werden kann.

Der Zugkörper kann vorteilhafterweise als Stab oder Hohlkörper, bevorzugt als dickwandiges Rohr ausgebildet sein und einen kreisförmigen, elliptischen, vieleckigen oder nach einer sonstigen geschlossenen geometrischen Form gebildeten Querschnitt aufweisen und in jede gewünschte Länge zugeschnitten werden können.

Das in der mindestens einen umhüllenden Schicht ausgebildete Profil ist bevorzugt durchgehend kraftschlüssig angeformt. Es kann jedoch in einer alternativen Ausführungsform nur über einen Teil der Zugkörperlänge ausgebildet sein oder in Teillängen unterschiedliche Formen aufweisen.

Erfindungsgemäß werden für den Innenteil des Zugkörpers Duroplaste, speziell Epoxide, Polyester und Vinylester, die in bekannter Weise mit geeigneten handelsüblichen Härtern gemischt sind, als Polymere verwendet.

In bevorzugter Weise bestehen der Innenteil des Zugkörpers und die mindestens eine umhüllende Schicht aus dem gleichen Polymer. Art und Anteil der Verstärkungsfasern und eventuell weitere Zusätze sind dabei dem jeweiligen Verwendungszweck angepaßt. In Zugkörpern aus unterschiedlichen Polymeren müssen diese jeweils miteinander verträglich sein, damit Delamilierungserscheinungen vermieden werden. Darüber hinaus ist es von Vorteil, wenn die einzelnen Polymeren an ihren Grenzflächen vermischt sind, was in vorteilhafter Weise durch den Druck des umhüllenden weiteren Polymeren beim Aufbringen desselben beeinflußt werden kann.

Eine bevorzugte Ausführungsform des erfindungsgemäßen Zugkörpers ist ein Zugstab mit einem Innenteil von 10 bis 50 mm, insbesondere von 15 bis 25 mm Durchmesser und mindestens einer umhüllenden Schicht mit einer Gesamtschichtdicke von 1 bis 20 mm, insbesondere von 2 bis 10 mm.

Eine weitere bevorzugte Ausführungsform ist ein Rohr, dessen Innenteil einen Innendurchmesser zwischen 10 und 15 mm und einen Außendurchmesser von 15 bis 25 mm aufweist, während die mindestens eine umhüllende Schicht eine Gesamtdicke von 2 bis 10 mm hat.

Die erfindungsgemäßen Zugkörper lassen sich kontinuierlich im sogenannten "on-line"-Verfahren herstellen mit den folgenden Schritten:
- Durchdringen der Langfaser mit dem ersten Polymeren,
- Formen des Zugkörper-Rohling-Innenteils durch Pultrusion,
- Aufbringen der mindestens einen umhüllenden Schicht aus mindestens einem kurzfaserverstärkten weiteren Polymeren auf den Rohling-Innenteil,
- wahlweise Aushärten oder Temperieren des Rohlings,
- Formen eines angeformten Profils in der mindestens einen umhüllenden Schicht des Rohlings über wenigstens einen Teil der Gesamtlänge des Rohlings,
- vollständiges Aushärten des Zugkörper-Rohlings,
- Zuschneiden des Zugkörpers aus dem Zugkörper-Rohling.

Ein wesentlicher Vorteil des erfindungsgemäßen Verfahrens besteht in der Möglichkeit durch Aufbringen des mindestens einen Polymeren unter Überdruck von 0,5x10⁵-1,5x10⁶ Pa (0,5 bis 15 bar), das aufgebrachte Polymere mit dem vorhandenen Polymeren oberflächlich durchdringen und/oder vermischen zu lassen und so eine, ausgezeichnete Kraftübertragung zu schaffen.

Das Formen des Profils erfolgt vorzugsweise durch Pressen, Walzen oder Schneiden.

Das erfindungsgemäße Verfahren kann durch Aneinanderreihen aller Verfahrensschritte "on-line" durchgeführt werden.

Die Figuren 1 bis 3 erläutern die Erfindung.

Es zeigen:
- Fig. 1 a + b: Zugstab im Längs- und Querschnitt mit einer umhüllenden Schicht mit eingearbeitetem Gewinde,
- Fig. 2: Zugstab mit zwei umhüllenden Schichten, noch ohne angeformtes Profil, im Querschnitt,
- Fig. 3: Umhüllungswerkzeug im Querschnitt.

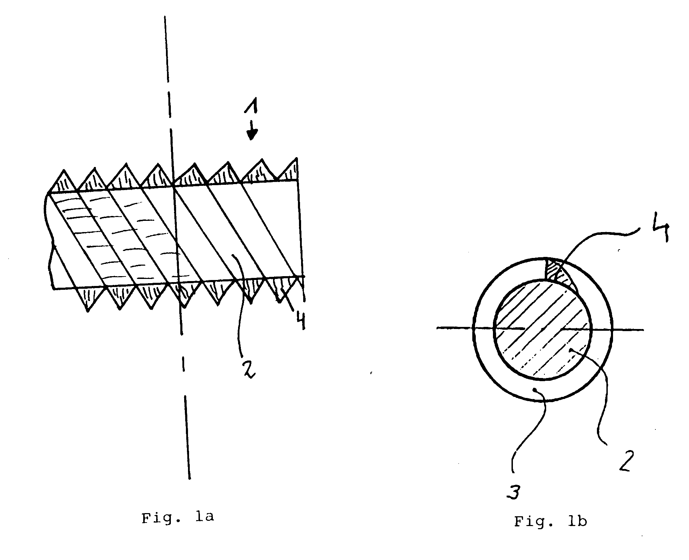

Fig. 1 a + b zeigen einen Längs- und Querschnitt durch einen Zugstab 1 mit langfaserverstärktem Innenteil 2 und einer umhüllenden Schicht 3 mit angeformten Profilen 4.

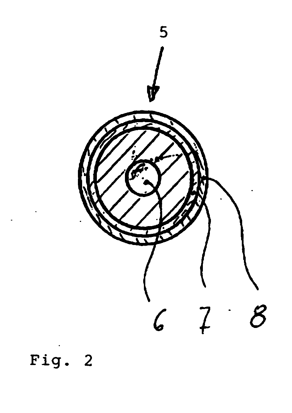

Fig. 2 zeigt den Querschnitt durch ein Zugrohr 5 mit rohrförmigen Innenteil 6 und zwei umhüllenden Schichten 7 und 8, bei denen noch kein Profil angeformt ist.

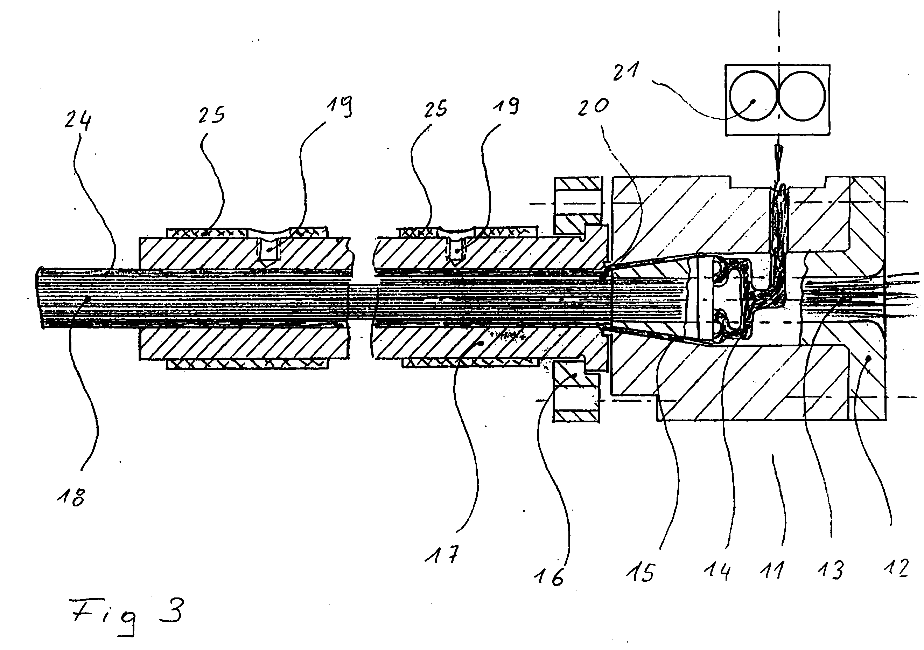

Fig. 3 zeigt den Querschnitt durch ein komplettes Umhüllungswerkzeug 11 zur Herstellung des Zugkörper-Rohlings mit einer umhüllenden Schicht, in dem der mit dem ersten Polymer durchdrungene Langfaserstrang 13 durch eine Pinole 12 geführt wird.

Auf der Außenseite der Pinole 12 sind Verteilerkanäle 14 eingefräst, die das von der Pumpe 21 geförderte weitere Polymer mit Kurzfasern und wahlweise weiteren Additiven gleichmäßig über den Umfang der Pinole verteilt. Am Ende des Umhüllungswerkzeugs 20 wird der über den Umfang verteilte Polymerstrom auf den nun aus der Pinole austretenden, mit Polymer durchdrungenen Glasfaserstrang 13 zusammengeführt. Im Aushärtewerkzeug 17, das mit Heizbändern 25 und Thermoelementen 19 auf die geeignete Aushärtungstemperatur gebracht wird, wird der nun aus Innenteil 18 und einer umhüllenden Schicht 24 bestehende Zugkörper-Rohling ausgehärtet. Der durch die Pumpe 21 aufgebrachte und geregelte Druck sorgt dafür, daß die mit Kurzfasern gefüllte umhüllende Schichtoberfläche in die Außenschicht des Innenteils eindringt und an der Grenzfläche für hervorragende Kraftübertragung sorgt. Das Aushärtewerkzeug 17 ist mit Flansch 16 wärmegetrennt an das Umhüllungswerkzeug 11 angeschlossen.

Die Pumpe 21 kann z.B. aus einem Kneter oder Compounder druckgesteuert beschickt werden. Die Produktionsgeschwindigkeit der Anlage wird so eingestellt, daß die umhüllende Schicht des pultrudierten Stabes nach dem Verlassen der Abzugseinheit nur teilweise ausgehärtet ist. Um ein vollständiges Aushärten der umhüllenden Schicht zwischen Düse und Abzug zu verhindern, kann der Rohling nach dem Verlassen der Düse abgekühlt werden. Nach der Abzugseinheit kann nun leicht ein Profil über die ganze Länge oder auch nur partiell zum Zwecke der Krafteinleitung eingepreßt, eingeschnitten oder eingewalzt werden. Nach der Profilierung kann aus dem Zugkörper-Rohling der eigentliche Zugkörper in gewünschten Längen zugeschnitten werden.

In Anordnungen für mehrere umhüllende Schichten sind Verteilerkanäle für die aufgebrachten Polymeren, die sich z.B. auch im Additivgehalt und/oder durch Gehalt und/oder Typ der Kurzstapelfaser unterscheiden können, vorteilhaft nacheinander angeordnet.

### Beispiel 1

Herstellung eines glasfaserverstärkten Zugstabes mit Durchmesser 25 mm. Durchmesser des Innenkerns 18 mm.

Im Kneter werden 100 Teile Epoxidharz (DOW D.E.R. 330), 90 Teile Härter (XZ 87 744.00) und 1,5 Teile Beschleuniger (K54) mit 30 % Quarzmehl und 15 % Kurzglas einer mittleren Länge von 200 µm intensiv gemischt und der Zahnradpumpe zugeführt. Vom Spulenregal wird ein Strang aus 78 Glasfasern mit 4800 tex durch ein Durchdringungsbad geführt, das ein Polymergemisch der folgenden Rezeptur enthält:
- 100: Teile Epoxidharz D.E.R. 330 (Dow Corning)
- 90: Teile Härter XZ 87 744.00
- 3: Teile Beschleuniger K54.

Der so durchdrungene Faserstrang wird durch den Umhüllungskopf geführt und mit der von der Zahnradpumpe gelieferten Umhüllungsschicht durch das Aushärtungswerkzeug gezogen. Der Überdruck des Polymers der Umhüllungsschicht wird vor dem Einlauf in das Aushärtungswerkzeug auf 1 bar eingestellt.

Die Abzugsgeschwindigkeit wurde auf 22 cm/min eingestellt.

Die Temperatur des Aushärtungswerkzeugs wurde in der ersten Zone auf 150°C und in der zweiten Zone auf 170°C eingestellt.

Der teilweise ausgehärtete aus dem Werkzeug austretende Rohling wurde kurz abgekühlt. Nach dem Verlassen der Abzugseinrichtung konnte in den Stab ein Gewinde M27 x 4 eingewalzt werden. Nach dem Einwalzen wurde der Zugstab bei 150°C nachgehärtet.

An dem so hergestellten Zugstab wurden Zugversuche durchgeführt, bei denen 100 bis 200 kN eingebracht werden konnten. Diese Werte liegen deutlich über denen von vergleichbaren Zugkörpern nach dem Stand der Technik.

## Patentansprüche

1. Verfahren zur kontinuierlichen Herstellung eines Zugkörpers (1,5) mit angeformtem Profil (4) mit den folgenden Schritten:
- ein Langfaserstrang wird vor dem Schritt des Formens eines Zugkörper-Innenteil-Rohlings (18) mit einem ersten Polymeren durchdrungen,
- Formen des Zugkörper-Innenteil-Rohlings (18) aus dem Langfaserstrang durch Pultrusion,
- Aufbringen von mindestens einer umhüllenden Schicht (3,7,8) aus mindestens einem kurzfaserverstärkten zweiten Polymeren auf den Zugkörper-Innenteil-Rohling (18),
- der Zugkörper-Innenteil-Rohling (18) wird nach dem Schritt des Aufbringens der zumindest einen umhüllenden Schicht (3, 7, 8) bei erhöhten Temperaturen teilweise ausgehärtet, wobei das zweite Polymer mindestens gleich dem ersten Polymer oder ein weiteres Polymer ist und die Polymere eine Mischung aus einem Duroplastharz und einem handelsüblichen Härter sind,
- Formen eines angeformten Profils (4) in der mindestens einen umhüllenden Schicht (3,7,8) des Zugkörper-Innenteil-Rohlings (18) über wenigstens einen Teil der Gesamtlänge des Zugkörper-Innenteil-Rohlings (18),
- der Zugkörper-Innenteil-Rohling (18) wird nach dem Schritt des Formens des Profils in der mindestens einen umhüllenden Schicht (3,7,8) bei erhöhten Temperaturen vollständig ausgehärtet, und
- der Zugkörper aus dem Zugkörper-Innenteil-Rohling (18) und der umhüllenden Schicht (3, 7, 8) wird zugeschnitten.

2. Verfahren nach Anspruch 1, wobei das angeformte Profil (4) ein Gewinde ist.

3. Verfahren nach Anspruch 1 oder 2, wobei das Formen des Profils (4) durch Pressen, Walzen oder Schneiden erfolgt.

4. Verfahren nach Anspruch 1, 2 oder 3, dadurch gekennzeichnet, daß das Aufbringen des mindestens einen kurzfaserverstärkten Polymeren unter einem Überdruck von 0,5 bis 15 bar erfolgt.

5. Zugkörper (1,5) hergestellt nach dem Verfahren nach einem der Ansprüche 1 bis 4 mit mindestens über einem Teil der Gesamtlänge des Zugkörpers (1,5) angeformtem Profil (4), bestehend aus einem durch Pultrusion hergestellten Innenteil (2,6) aus einem mit Langfasern verstärkten ersten Polymeren und aus mindestens einer mit Kurzstapelfasern verstärkten umhüllenden Schicht (3,7,8) aus mindestens dem gleichen oder einem weiteren Polymeren, wobei die Polymere eine Mischung aus einem Duroplastharz und einem handelsüblichen Härter sind.

6. Zugkörper (1,5) nach Anspruch 5, wobei das Duroplastharz ausgewähit ist aus der Gruppe Epoxide, Polyester und Vinylester.

7. Zugkörper (1,5) nach Anspruch 5 und 6, wobei die Duroplastharz-Härter-Mischung mit Endlosfasern verstärkt ist.

8. Zugkörper (1,5) nach Anspruch 5, 6 oder 7, wobei das mindestens eine weitere Polymere mit Whiskers verstärkt ist.

9. Zugkörper (1,5) nach den Ansprüchen 5 bis 8, wobei die verstärkenden Fasern des einen ersten oder des weiteren Polymeren gleich oder unterschiedlich sind und ausgewähit sind aus der Gruppe, die aus Kohlenfaser, Glasfaser, Polyacrylfaser, Aramidfaser besteht.

10. Zugkörper (1,5) nach einem der vorhergehenden Ansprüche, wobei er die Form eines Stabes oder Hohlkörpers besitzt.

11. Zugkörper (1,5) nach Anspruch 10, wobei der Hohlkörper ein Rohr ist.

12. Zugkörper (1,5) nach einem der vorhergehenden Ansprüche, wobei er einen kreisförmigen, elliptischen, vieleckigen Querschnitt oder einen nach einer geschlossenen geometrischen Form gebildeten Querschnitt aufweist.

13. Verwendung eines Zugkörpers gemäß einem der Ansprüche 5 bis 12 als Zug- oder Felsanker.

## Claims

1. A process for the continuous preparation of a tensile body (1, 5) with a shaped profile (4) comprising the following steps:
impregnating a long fiber cord before the step of forming a tensile body interior brute (18) with a first polymer,
forming the tensile body interior brute (18) by pultrusion of the long fibre cord,
applying at least one cover layer (3, 7, 8) on the tensile body interior brute (18)of at least a second polymer reinforced with short fibers,
partially hardening the tensile body interior brute (18) after applying the at least one cover layer (3, 7, 8) at increased temperatures, the second polymer is at least the same as the first polymer or another polymer, and the polymers are a mixture of a durpolastic resin and a commercially available hardener,
forming the adformed profile (4) in the at least on cover layer (3, 7, 8) of the tensile body interior brute (18) across at least a part of the entire length of the tensile body interior brute (18),
completely hardening the tensile body interior brute (18) after the step of forming the profile in the at least one cover layer (3, 7, 8) at increased temperatures, and
cutting the tensile body out of the tensile body interior brute (18) and the cover layer (3, 7, 8).

2. The process according to claim 1, wherein the shaped profile is a thread.

3. The process according to claim 1 or 2, wherein the step of forming the profile (4) is performed by pressing, rolling or cutting

4. The process according to claim 1, 2 or 3, characterized in that the step of applying the at least one polymer reinforced by short fibres is performed at a pressure or from 0.5 to 15 bar.

5. A tensile body (1, 5), prepared with a profile shaped across at least a part of the entire length of the tensile body (1, 5), consisting of an interior body (2,6) of a first polymer reinforced with long fibres and prepared by pultrusion, and at least a cover layer (3, 7, 8) of at least the same or a different polymer, reinforced with short fibres, wherein the polymers are a mixture of a duroplastic resin and a commercially available hardener.

6. The tensile body (1, 5) according to claim 5, wherein the duroplastic resin is selected from the group consisting of epoxides, polyesters and vinyl esters.

7. The tensile body (1, 5) according to claim 5 and 6, wherein the mixture of duoplastic resin - hardener is reindorced with endless fibres.

8. The tensile body (1, 5) according to claim 5, 6 or 7, wherein the at least second polymer is reinforced with whiskers.

9. The tensile body (1, 5) according to claims 5 to 8, wherein the reinforcing fibres of the first or another polymer are identical or different und are selected from the group consisting of carbon fibre, glas fibre, polyacrylic fibres aramid fibres.

10. The tensile body (1, 5) according to claim 10, wherein the it has the form of a rod or a hollow body.

11. The tensile body (1, 5) according to claim 10, wherein the hollow body is a tube.

12. The tensile body (1,5) according to any of the preceding claims, wherein it has an annular, elliptical, polygonal cross section or has a cross sectoin according to a closed geometric form.

13. Use of a tensile body according to any of the claims 5 to 12 as a pull anchor or as a rock anchor.

## Revendications

1. Procédé pour la fabrication continue d' un tirant (1, 5) avec un profile (4) conformé comprenant les étapes suivants:
imprégner un écheveau de fibres long par un premier polymère avant l' étape de former une partie intérieure brute (18) du tirant,
former la partie intérieure brute (18) du tirant à partir de l' écheveau à fibres long par pultrusion,
appliquer au moins une couche enveloppante (3, 7, 8) d'au moins un second polymère renforcé par des fibres courts sur la partie intérieure brute (18) du tirant,
la partie intérieure brute (18) du tirant étant au moins partiellement durcie à une température élevée après l' étape de former la dite au moins une couche enveloppante (3, 7, 8), le deuxième polymère étant au moins égale au premier polymère ou étant un autre polymère et les polymères étant un mélange d'une résine duroplaste et d'un agent durcisseur commercialement disponible,
former un profile (4) conformé dans la dite au moins une couche (3, 7, 8) enveloppante de la partie intérieure brute (18) du tirant sur au moins une partie de la longueur totale de la partie intérieure brute (18) du tirant,
la partie intérieure brute (18) du tirant étant durcie complètement à une température élevée après l' étape de former le profile dans la dite au moins une couche (3, 7, 8) enveloppante et
le tirant étant coupé à partir de la partie intérieure brute (18) du tirant et de la couche (3, 7, 8) enveloppante.

2. Procédé selon la revendication 1 dans lequel le profile (4) conformé étant un taraudage.

3. Procédé selon la revendication 1 ou la revendication 2 dans lequel l' étape de former les profiles (4) est obtenu par pressage, laminage ou par coupure.

4. Procédé selon la revendication 1, 2 ou 3 caractérisé en ce que de l' étape de l'application du dit au moins un polymère étant renforcé par des fibres courts est effectué en sou pression de 0,5-15 bar.

5. Tirant fabriqué par un procédé selon l' une des revendications 1-4 avec au moins sur une partie de la longueur totale du tirant (1, 5) un profile (4) conformé, étant composé d' une partie intérieure (2, 6) fabriquée par pultrusion à partir d' un premier polymère renforcé par des fibres longs et à partir d' une couche (3, 7, 8) enveloppante, renforcée par des fibres courts d' au moins le même ou un autre polymère, les polymères étant un mélange d' une résine duroplaste et d' un agent durcisseur commercialement disponible.

6. Corps à traction (1, 5) selon la revendication 5, la résine duroplaste étant choisi parmis le groupe époxydes, polyesters et vinylesters.

7. Corps à traction (1, 5) selon la revendication 5 et 6, le mélange résine duroplaste et agent durcisseur étant renforcés par fibres sans fin.

8. Corps à traction (1, 5) selon la revendication 5, 6 ou 7, le dit autre polymère étant renforcé par des whiskers.

9. Corps à traction (1, 5) selon les revendications 5 à 8, les fibres renforcants du dit premier ou du dit autre polymère étant égales ou différentes et choisi par le milieu de groupe fibre à carbone, fibre à verte, fibre polyacrylique, fibre aramide.

10. Corps à traction (1, 5) selon l'une de revendications précédentes, comprenant la forme d'une barre ou d'un corps creux.

11. Corps à traction (1, 5) selon la revendication 10, le corps creux étant un tube.

12. Corps à traction (1, 5) selon l'une de revendications précédentes, ayant une section ronde, elliptique, polygonal ou une section formée à partir d'une autre forme géométrique close.

13. Usage du tirant selon l'une de revendications 5 à 12 comme tirant d'ancrage ou comme tirant de roche ou ancre de roche.
